# EUROPÄISCHE PATENTSCHRIFT

(11) **EP 3 185 654 B1**
(45) Veröffentlichungstag und Bekanntmachung des Hinweises auf die Patenterteilung: **26.02.2020**
(21) Anmeldenummer: 16196842.5
(22) Anmeldetag: 02.11.2016
(51) Int. Cl.: H05B 37/02, G08C 17/02

(54) **VERFAHREN ZUM ZUORDNEN VON ÜBER EIN DRAHTLOSES KOMMUNIKATIONSNETZWERK ANSTEUERBAREN TEILNEHMERN ZU ZUMINDEST EINEM BEDIENSENDER**
METHOD FOR ALLOCATING PARTICIPANTS WHICH CAN BE CONTROLLED VIA A WIRELESS COMMUNICATION NETWORK TO AT LEAST ONE CONTROL TRANSMITTER
PROCÉDÉ D'ATTRIBUTION DE PARTICIPANTS COMMANDÉS PAR UN RÉSEAU DE COMMUNICATION SANS FIL À AU MOINS UN ÉMETTEUR

(30) Priorität: 21.12.2015 DE 102015122331
(43) Veröffentlichungstag der Anmeldung: 28.06.2017
(73) Patentinhaber: Insta GmbH, 58509 Lüdenscheid (DE)
(72) Erfinder: Neuhaus, Stefan, 44287 Dortmund (DE); Sangermann, Marc, 44139 Dortmund (DE)

(56) Entgegenhaltungen:
- WO-A1-2015/104248
- DE-T2- 69 734 569
- US-A1- 2011 266 345

## Beschreibung

Die Erfindung betrifft ein Verfahren zum Zuordnen von über ein drahtloses Kommunikationsnetzwerk ansteuerbaren Teilnehmern (Empfängern) zu zumindest einem außerhalb einer möglichen Nahbereichskommunikation mit den Empfängern angeordneten Bediensender, durch welchen Bediensender nach erfolgter Zuordnung die ihm zugeordneten Empfänger angesteuert werden können wobei die Empfänger eingerichtet sind, um eine Netzwerkverknüpfung mittels einer drahtlosen Nahbereichskommunikation nach zuvor erfolgter Aufforderung mit einem Sender einzugehen. Ferner betrifft die Erfindung ein drahtloses Kommunikationsnetzwerk.

Im Bereich der Gebäudeinstallation werden drahtlose Kommunikationsnetzwerke eingesetzt, um über diese seitens eines Bediensenders ein oder mehrere Empfänger anzusteuern. Gerade bei nachträglichen Installationen oder bei solchen Installationen, die ab und zu geändert werden sollen, bedient man sich bevorzugt einer drahtlosen Kommunikationsstrecke, um von einem Bediensender ein oder mehrere Empfänger anzusteuern. Als Empfänger kann im Rahmen dieser Ausführung grundsätzlich jeder Aktor angesehen sein. Lampen und Leuchten mögen beispielhaft als Aktoren genannt sein. Es sind beispielsweise Lampen und Leuchten bekannt, die ein integriertes Netzwerkfunk- und Netzwerksteuerglied aufweisen, damit diese über die drahtlose Kommunikationsstrecke von einem Bediensender angesteuert werden können. Derartige Lampen und Leuchten können zur Abgabe von farbigem Licht vorgesehen sein. Typischerweise sind Lampen und Leuchten heute zu diesem Zweck mit Leuchtdioden (LED) bestückt und werden mit einem entsprechenden Vorschaltgerät angetrieben. Lampen und Leuchten können gebäudeseitig fest installiert oder auch Teil anderer Einrichtungsgegenstände sein. Neben diesen Empfängern verfügt das Netzwerk über zumindest einen Bediensender. Dieser ist wandseitig angeordnet, damit man, den herkömmlichen Gewohnheiten folgend, beim Eintreten in einen Raum oder beim Verlassen desselben durch Betätigung des als Bediensender ausgelegten Wandschalters die Raumbeleuchtung oder einen Teil derselben ein- und ausschalten kann.

Zur Einrichtung eines solchen Netzwerkes ist es erforderlich, im Rahmen einer Nahbereichskommunikation jeweils eine Verknüpfung zwischen dem zumindest einen grundsätzlich stationären Bediensender anzusteuernden Lampen und/oder Leuchten (Aktoren) und dem Bediensender herzustellen. Ein Standard, mit dem dieses durchgeführt werden kann, ist beispielsweise der ZigBee Light Link Standard der ZigBee Alliance, Inc. Dieser Standard umfasst die Verknüpfungsroutine "Touchlink". Wird diese Routine im Rahmen einer Nahbereichskommunikation von einer hierdurch angesprochenen Lampe oder Leuchte empfangen, werden der diese Routine ausgebende Sender und der diese Routine empfangende Teilnehmer miteinander als Teil eines gemeinsamen Kommunikationsnetzwerkes verknüpft. Dieses umfasst auch, dass der durch diese Routine angesprochene Teilnehmer an den die Routine "Touchlink" ausgebenden Sender seine für die Kommunikation im Netzwerk notwendigen Netzwerkparameter übermittelt. In aller Regel wird man diese Nahbereichskommunikation auf 1 bis 1,5 m oder auch weniger begrenzen, um individuell eine Verknüpfung mit einzelnen Empfängern vornehmen zu können. Die Einrichtung des Nahbereiches ist abhängig von der gewünschten Auslegung und kann durchaus auch kleiner als 0,5 m sein. Auch sind Nahbereichskommunikationen möglich, die noch bei einer Entfernung von drei Metern funktionieren. Da es umständlich oder bei gebäudeseitig fest installierten Lampen oder Leuchten dieser Art nicht möglich ist, diese zum Zwecke einer Verknüpfung mit einem wandseitigen Bediensender in dessen Nähe zu bringen, werden wandseitig montierte Bediensender eingesetzt, die gebäudeseitig nicht fest installiert sind, sondern für die Zwecke einer Zuordnung der von diesen anzusteuernden Empfänger aus einer Halterung heraus- bzw. abgenommen werden können. Bei diesem Konzept wird ein solcher wandseitig gehaltener Bediensender aus seiner wandseitigen Halterung entfernt und zum Verknüpfen desselben mit den von ihm anzusteuernden Lampen oder Leuchten jeweils in deren Nähe gebracht, um dann die vorbeschriebene Verknüpfung im Rahmen einer Nahbereichskommunikation durchführen zu können. Dieses erlaubt nicht nur eine Zuordnung von Empfängern bei einer Neueinrichtung an einen solchen wandseitig gehaltenen Bediensender, sondern auch eine Änderung in der Zuordnung der anzusteuernden Empfänger durch Aufbau eines neuen Netzwerkes.

DE 697 34 569 T2 offenbart ein Verfahren zur Einrichtung eines drahtlosen Netzes. Das in diesem Stand der Technik beschriebene Verfahren dient zum Programmieren von Netzwerkknoten. Diese sind in einem ersten Schritt physikalisch platziert worden. In einem zweiten Schritt wird unter Verwendung eines drahtlosen Installationsgerätes jedem Knoten eine Adresse programmiert. Information bezüglich der physikalischen Platzierung eines solchen Knotens und der ihm zugeordneten Adresse werden an einen Steuerknoten - einem Gebäudecomputer - übermittelt. Neben der Adresse erhält der Knoten bei seiner Programmierung alle notwendigen Standardeinstellungen. In jedem Knoten ist ein Beleuchtungsmodul oder es sind mehrere Beleuchtungsmodule zugeordnet. Wie die Zuordnung der Beleuchtungsmodule zu dem jeweiligen Knoten erfolgt, ist in diesem Stand der Technik nicht beschrieben.

WO 2015/104248 A1 offenbart ein Tablet-PC basiertes Kommissionierungswerkzeug zum Zuordnen von in einem Gebäude befindlicher Aktoren, beispielsweise von Leuchten (devices) und Sensoren, wie Tastern (control-devices). Bei dem in diesem Dokument beschriebenen Verfahren werden mit einem portablen Bedienteil alle in Reichweite befindlichen controllable devices und control devices eingesammelt und anschließend manuell miteinander geknüpft, so dass dann die mit einem Bedienteil verknüpften Empfänger von diesem angesteuert werden können.

Auch wenn vom technischen her mit dem eingangs gewürdigten, vorbekannten Konzept einem Bediensender unterschiedliche, insbesondere auch gebäudeseitig fest installierte Empfänger zugeordnet (kommissioniert) werden können, muss jedoch in Kauf genommen werden, dass aufgrund der notwendigen Portabilität des Bediensenders Einschränkungen hinsichtlich der Designmöglichkeiten hingenommen werden müssen. Soll eine Aktorbetätigung in einem Raum, also beispielsweise die Raumbeleuchtung, von mehreren Stellen aus bedient werden, da der Raum mehrere Ein- bzw. Ausgänge aufweist, muss die Zuordnung der anzusteuernden Teilnehmer mit jedem Bediensender einzeln vorgenommen werden.

Ausgehend von diesem diskutierten Stand der Technik liegt der Erfindung daher die Aufgabe zugrunde, ein eingangs genanntes, gattungsgemäßes Verfahren sowie ein drahtloses Kommunikationsnetzwerk, umfassend einen Bediensender und ein oder mehrere von diesem anzusteuernde Aktoren, dergestalt auszubilden, dass nicht nur in der am Design orientierten Auslegung eines wandseitig montierten Bediensenders weniger Einschränkungen in Kauf genommen werden müssen, sondern dass auch bei Vorhandensein mehrerer wandseitig montierter Bediensender das Zuordnungsprozedere zu den einzelnen Bediensendern vereinfacht ist.

Entsprechend der offenbarten Erfindung wird ein Verfahren nach Anspruch 1 sowie ein drahtloses Netzwerk nach Anspruch 12 bereitgestellt. Gelöst wird die verfahrensbezogene Aufgabe erfindungsgemäß durch ein eingangs genanntes, gattungsgemäßes Zuordnungsverfahren, bei dem die Nahbereichskommunikation nur in einem Nahbereich von wenigen Dezimetern möglich ist und bei dem in einem ersten Schritt mit einem, als Sender ausgelegten, portablen Bedienteil die zu ihrer Ansteuerung notwendigen Netzparameter derjenigen Empfänger durch Verknüpfen derselben über die Nahbereichskommunikation mit dem portablen Bedienteil eingesammelt werden, die dem zumindest einen stationären Bediensender zugeordnet werden sollen, und bei dem in einem nachfolgenden Schritt die Liste der eingesammelten und dem stationären Bediensender zuzuordnenden Empfänger mit ihren Netzwerkparametern von dem portablen Bedienteil an den Bediensender über die Nahbereichskommunikation übertragen wird, sodass anschließend von dem stationären Bediensender die ihm zugeordneten Empfänger angesteuert werden können.

Die kommunikationsnetzwerksbezogene Aufgabe wird gelöst durch ein drahtloses Kommunikationsnetzwerk zum Durchführen des vorgenannten Verfahrens mit zumindest einem stationär angeordneten Bediensender, mit von diesem ansteuerbaren Empfängern und mit einem als Sender ausgelegten, portablen Bedienteil, welche vorgenannten Teilnehmer des Kommunikationsnetzwerkes zumindest für die Zwecke einer Zuordnung von Empfängern an den zumindest einen stationären Bediensender unter Verwendung einer Nahbereichskommunikation ausgelegt sind, und das portable Bedienteil zum Erstellen einer Zuordnung von von dem stationären Bediensender anzusteuernden Empfängern dient.

Bei diesem Verfahren - gleiches gilt für das beanspruchte Kommunikationsnetzwerk - wird ein portables Bedienteil verwendet, mit dem die für eine Ansteuerung eines Empfängers notwendigen Netzwerkparameter von all denjenigen Empfängern (Aktoren) eingesammelt werden, die von einem wandseitig insbesondere stationär angeordneten Bediensender angesteuert werden sollen. Somit wird bei diesem Verfahren zunächst eine Verknüpfung zwischen einem, als Sender ausgelegten portablen Bedienteil und den gewünschten Empfängern erstellt. In einem nachfolgenden Schritt wird die auf diese Weise zu einem oder mehreren Empfängern hergestellte Verknüpfung auf einen stationären Bediensender übertragen, sodass anschließend diejenigen Empfänger, die Teil der von dem portablen Bedienteil an den stationären Bediensender übertragenen Empfängerliste sind, von dem stationären Bediensender angesteuert werden können. Es ist bei diesem Verfahren also nicht erforderlich, den stationären Bediensender von der Wand abnehmbar auszulegen. Dieses eröffnet für die Auslegung eines solchen stationären Bediensenders weitere Freiheitsgrade in seiner vor allem am Design orientierten Auslegung. Dadurch, dass die Kommissionierung und somit das Einsammeln der von einem stationären Bediensender anzusteuernden Empfänger durch ein zusätzliches portables Teil - dem portablen Bedienteil - vorgenommen wird, kann die von dem portablen Bedienteil aufgebaute Empfängerliste, die ein oder auch mehrere Empfänger enthalten kann, nicht nur an einen stationären Bediensender, sondern an beliebig viele stationäre Bediensender übertragen werden. Dieses erfolgt ohne, dass der stationäre Bediensender abmontiert werden müsste. Daher erfolgt die Einrichtung mit einem erheblichen Minderaufwand, verglichen mit vorbekannten Verfahren. Dann können die in der Empfängerliste enthaltenen Empfänger von jedem stationären Bediensender aus angesteuert werden, an den diese Empfängerliste übertragen worden ist. Somit ist es auch bei Vorsehen mehrerer stationärer Bediensender, die ein und dieselben Empfänger ansteuern sollen, nur einmal erforderlich, die diesbezüglichen Empfänger bzw. deren für ihre Ansteuerung notwendigen Netzwerkparameter einzusammeln. Das Übertragen der Empfängerliste von dem portablen Bedienteil an einen stationären Bediensender erfolgt zweckmäßigerweise auf der Nahbereichskommunikationsstrecke.

Das Vorsehen eines zusätzlichen portablen Bedienteils erlaubt zudem eine Vereinfachung des Aufbaus eines stationären Bediensenders, wenn dieser ausgelegt ist bzw. ausgelegt sein soll, um unterschiedliche Empfänger oder Empfängergruppen unabhängig voneinander anzusteuern. Eine solche Gruppierung kann von dem portablen Bedienteil vorgenommen werden, sodass der Prozess einer solchen Zuordnung dem portablen Bedienteil und nicht notwendigerweise dem stationären Bediensender zugeordnet sein muss. Selbstverständlich ist auch dieses möglich.

Mit dem portablen Bedienteil besteht daher die Möglichkeit, auch den stationären Bediensender zu programmieren, sodass letzterer nicht notwendigerweise die hierfür erforderlichen Ressourcen aufweisen muss. So besteht die Möglichkeit je nach Auslegung des stationären Bediensenders und des portablen Bedienteils, dass über das portable Bedienteil vorgegeben wird, wie bei der Übertragung einer Empfängerliste von dem portablen Bedienteil an den stationären Bediensender mit einer bereits in dem stationären Bediensender abgelegten Empfängerliste oder einzelner Empfänger daraus umzugehen ist. Möglich ist, dass bei der Übertragung einer Empfängerliste eine ggf. im stationären Bediensender vorhandene Empfängerliste überschrieben wird, mithin die neu übertragene Empfängerliste die zuvor vorhandene ersetzt. In einem anderen Modus werden in eine vorhandene Empfängerliste des stationären Bediensenders bei Empfang einer neuen Empfängerliste diejenigen Empfänger zu der vorhandenen Empfängerliste hinzugefügt, die in dieser noch nicht verzeichnet sind. Gemäß noch einem weiteren Modus werden in der Empfängerliste des stationären Bediensenders bei Empfang einer neuen Empfängerliste durch das portable Bedienteil diejenigen Empfänger aus der vorhandenen Empfängerliste gelöscht, die auch in der neuen Empfängerliste enthalten sind. Noch nicht in der vorhandenen Empfängerliste vorhandene Empfänger in der übertragenen Empfängerliste werden hingegen in die bediensenderseitige Empfängerliste aufgenommen. Es versteht sich, dass auch eine Kombination dieser beispielhaften Betriebsmodi im Zusammenhang mit einer Übertragung einer Empfängerliste von dem portablen Bedienteil an den stationären Bediensender möglich ist, und zwar ebenso wie eine Einstellungsvorwahl in Bezug auf den jeweiligen Modus, falls gewünscht, am stationären Bediensender und nicht über das portable Bedienteil.

Das Vorsehen eines zusätzlichen portablen Bedienteils für die vorgenannten Zwecke hat ferner den Vorteil, dass dieses auch als Fernbedienung genutzt werden kann. Dieses ist praktisch, da dann eine Ansteuerung der Aktoren auch unabhängig von dem oder den stationären Bediensendern vorgenommen werden kann. Bei dieser Konzeption macht man sich den Umstand zunutze, dass das portable Bedienteil ohnehin als Sender ausgelegt ist. Bei einer solchen Ausgestaltung des portablen Bedienteils wird man dieses auslegen, um den Betrieb in zwei Sendemodi zu ermöglichen, und zwar zum einen in einem Einsammelmodus, der auch das Übertragen einer Empfängerliste an einen stationären Bediensender umfasst, und zum anderen in einem Ansteuermodus (Fernbedienmodus), in dem das portable Bedienteil die in seiner Empfängerliste gelisteten Empfänger ansteuern kann. Ist das portable Bedienteil in seinen Ansteuermodus geschaltet, kann vorgesehen sein, dass der Sender mit einer höheren Leistung arbeitet, um die anzusteuernden Empfänger erreichen zu können. Zweckmäßig ist es bei einem solchermaßen ausgelegten portablen Bedienteil, wenn die eingesammelten Empfängerdaten, zusammengefasst in einer Empfängerliste aus einem Empfängereinsammelspeicher in einen Empfängeransteuerspeicher verschoben werden. Dann bleibt diese Empfängerliste erhalten, auch wenn mit dem portablen Bedienteil neue Empfänger bzw. deren für eine Ansteuerung notwendigen Netzwerkparameter eingesammelt werden. Insofern kann dieses auch als Sicherheitsmerkmal dieses Konzeptes angesehen werden. Grundsätzlich ist dieses nicht erforderlich, um das Verfahren ausführen zu können.

Zum Zwecke einer Nahbereichskommunikation wird man vorzugsweise die am Aufbau des Kommunikationsnetzwerkes beteiligten Teilnehmerstationärer Bediensender, portables Bedienteil und Empfänger - nach einem gemeinsamen Standard arbeitend auslegen. Hierzu bietet es sich an, auf den ZigBee Light Link Standard der ZigBee Alliance, Inc. zurückzugreifen. Es versteht sich, dass auch andere Spezifikationen eingesetzt werden können, über die ein Datenaustausch und somit eine Verknüpfung zwischen einem Sender und zumindest einem Empfänger im Bereich einer Nahbereichskommunikation möglich ist.

Nachfolgend ist die Erfindung anhand eines Ausführungsbeispiels unter Bezugnahme auf die beigefügten Figuren beschrieben. Es zeigen:
- **Fig. 1:**: Eine schematisierte Darstellung eines in einem Raum eines Gebäudes angeordneten Kommunikationsnetzwerkes, umfassend Leuchten, einen stationär installierten, als Wandschalter ausgelegten Bediensender und einen portablen Bedienteil,
- **Fig. 2:**: ein erster Verfahrensschritt zum Zuordnen der von dem wandseitig montierten Bediensender anzusteuernden Leuchten,
- **Fig. 3:**: die in Figur 1 gezeigte Anordnung während eines zweiten Schrittes zum Zuordnen der von dem wandseitig montierten Bediensender anzusteuernden Leuchten und
- **Fig. 4:**: das Kommunikationsnetzwerk der vorangegangenen Figuren mit einem zusätzlich darin eingebrachten, als Gateway eingesetzten Router.

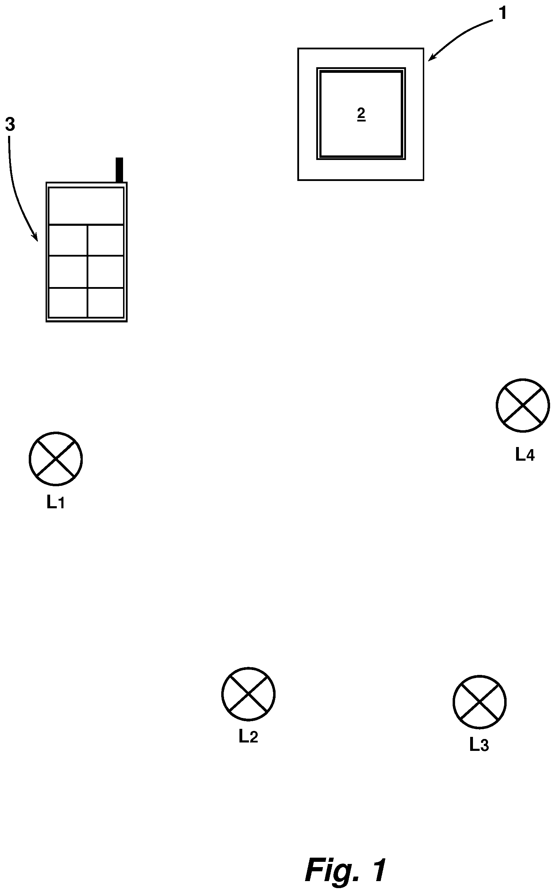

In einem im Übrigen nicht näher dargestellten Raum eines Gebäudes sind mehrere Leuchten installiert. Beispielhaft sind in Figur 1 vier Leuchten L₁ bis L₄ gezeigt. Diese können deckenseitig fest installiert sein oder es kann sich hierbei auch um Lampen von Stehleuchten oder auch andere Leuchten handeln. Die Lampen und Leuchten sind im Rahmen eines Gebäudeinstallationssystems als Aktoren anzusprechen. Wie nachstehend ausgeführt, sind die Leuchten L₁ bis L₄ in ein Kommunikationsnetzwerk integriert und sind somit gleichsam Teilnehmer des Kommunikationsnetzwerkes. Da die Leuchten L₁ bis L₄ angesteuert werden, sind diese in dem Kommunikationsnetzwerk Empfänger (Befehlsempfänger). Die Leuchten L₁ bis L₄ verfügen jeweils über ein Netzwerkfunk- und Netzwerksteuerglied, sodass diese auf einer drahtlosen Kommunikationsstrecke, hier: auf einer Funkstrecke, angesteuert werden können. Zum Ansteuern der Leuchten L₁ bis L₄ ist ein wandseitig stationär montierter Bediensender 1 vorgesehen. Der stationäre Bediensender 1 ist nach Art eines Wandschalters konzipiert und kann ein oder mehrere zum Beispiel als Tasten ausgebildete Bedienelemente 2 und/oder auch ein berührungssensitives Display als Bedienelement aufweisen. Der Einfachheit halber ist in Figur 1 der stationäre Bediensender 1 mit einer Taste gezeigt die das Bedienelement 2 darstellt.

Damit von dem stationären Bediensender 1 die Leuchten L₁ bis L₄ sowie ggf. weitere Lampen und Leuchten oder auch andere Aktoren angesteuert werden können, muss der stationären Bediensender 1 mit der oder mit den anzusteuernden Leuchten L₁ bis L₄ verknüpft werden. Es ist daher erforderlich, die mit dem stationären Bediensender 1 anzusteuernden Leuchten L₁ bis L₄ als Aktoren mit dem stationären Bediensender 1 zu verheiraten und auf diese Weise ein Kommunikationsnetzwerk aufzubauen.

Sowohl der stationäre Bediensender 1 als auch die Leuchten L₁ bis L₄ sind nach dem ZigBee Light Link Standard der ZigBee Alliance, Inc. arbeitend ausgelegt. Diese Spezifikation umfasst nicht nur eine standardisierte Routine für die Ansteuerung der Leuchten L₁ bis L₄, sondern stellt ebenfalls eine Verknüpfungsroutine bereit. Hierbei handelt es sich um die Routine "Touchlink". Mit dieser Routine, abgesetzt durch einen Sender, stellt der diese Routine empfangende Aktor, hier: eine oder mehrere der Leuchten L₁ bis L₄, die für seine Ansteuerung notwendigen Netzparameter zur Verfügung und ist nach Vollzug dieser Routine mit dem diese Routine "Touchlink" absetzenden Sender als Netzteilnehmer verheiratet. Diese Kommunikation ist nur in einem Nahbereich von wenigen Dezimetern möglich, um zu gewährleisten, dass einzelne Aktoren unabhängig voneinander in ein Kommunikationsnetzwerk eingebracht werden können. Es versteht sich, dass eine solche Verheiratung durch eine Nahbereichskommunikation auf einer drahtlosen Strecke auch mit einem anderen Standard vorgenommen werden kann.

Bei dem in den Figuren beispielhaft dargestellten Ausführungsbeispiel können weder die Leuchten L₁ bis L₄ einzeln oder in Gruppen, noch der stationäre Bediensender 1 räumlich zueinander gebracht werden, jedenfalls nicht ohne größeren Aufwand. Um dennoch die gewünschte Kommissionierung und damit die gewünschte Zuordnung vorzunehmen, wird ein portables Bedienteil 3 eingesetzt. Bei dem portablen Bedienteil 3 handelt es sich um ein Gerät, welches nach Art einer Fernbedienung ausgelegt ist und somit ohne weiteres mitgeführt werden kann.

Das portable Bedienteil 3 wird in einem ersten Schritt zum Zuordnen der von dem stationären Bediensender 1 anzusteuernden Leuchten L₁ bis L₄ an jede dieser Leuchten L₁ bis L₄ herangeführt und mit jeder Leuchte L₁ bis L₄ über die vorbeschriebene Nahbereichskommunikation durch Ausüben der Routine "Touchlink" verknüpft. Es versteht sich, dass auch das portable Bedienteil 3 nach der vorbeschriebenen ZigBee Light Link Spezifikation arbeitend ausgelegt ist.

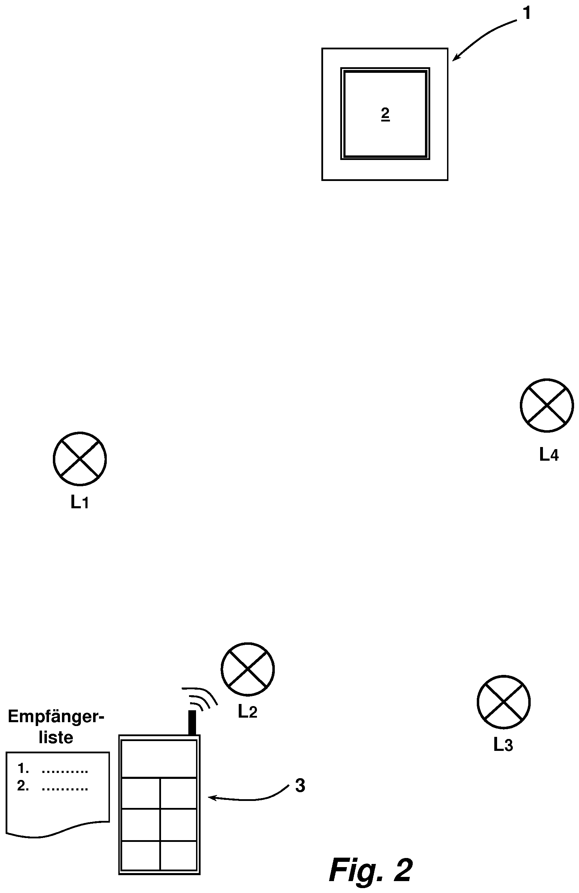

Figur 2 zeigt das portable Bedienteil 3, wie dieses in die Nähe der Leuchte L₂ gebracht worden ist, um die "Touchlink"-Verknüpfung herzustellen. Auf diese Weise wurde auch zuvor eine Verknüpfung mit der Leuchte L₁ vorgenommen. Bei der Ausführung der "Touchlink"-Routine werden durch das portable Bedienteil 3 die notwendigen Netzwerkparameter der jeweiligen Leuchte, hier: der Leuchte L₂ ausgelesen und in eine temporäre Empfängerliste des portablen Bedienteils 3 geschrieben. Die Leuchten L₁ bis L₄ sind bei dem dargestellten Ausführungsbeispiel so weit räumlich voneinander getrennt, dass ein von dem portablen Bedienteil 3 ausgelöste "Touchlink"-Routine nur jeweils von einer der Leuchten L₁ bis L₄ empfangen werden kann. Wird die "Touchlink"-Routine von mehreren Aktoren empfangen, wird eine Verknüpfung dieser mehreren Aktoren mit dem portablen Bedienteil 3 hergestellt.

Das portable Bedienteil 3 wird zu jeder Leuchte L₁ bis L₄ gebracht, die von dem stationären Bediensender 1 angesteuert werden soll. Im vorliegenden Fall sind dieses die in den Figuren gezeigten Leuchten L₁ bis L₄. Jede erstellte Verknüpfung wird in die Empfängerliste des portablen Bedienteils 3 eingetragen. Abgelegt ist die Empfängerliste in einem Einsammelspeicher.

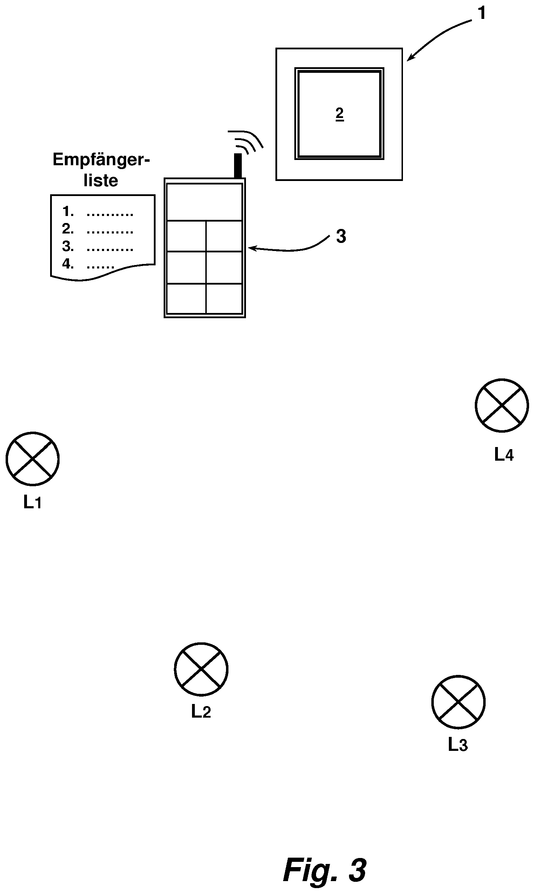

Sind mit dem portablen Bedienteil 3 die notwendigen Netzwerkparameter derjenigen Leuchten L₁ bis L₄ eingesammelt, die mit dem stationären Bediensender 1 angesteuert werden sollen, wird das portable Bedienteil 3 in die Nähe des stationären Bediensenders 1 gebracht, und zwar so weit, dass beide Komponenten - portables Bedienteil 3 und stationärer Bediensender 1 - über beschriebene Nahbereichskommunikation miteinander kommunizieren können. In einem zweiten Schritt der Zuordnung der von dem stationären Bediensender 1 anzusteuernden Leuchten L₁ bis L₄ wird von dem portablen Bedienteil 3 die Empfängerliste an den stationären Bediensender 1 übertragen (s. Figur 3). Somit erhält der stationäre Bediensender 1 auf diese Weise die für eine Ansteuerung notwendigen Netzwerkparameter von denjenigen Leuchten L₁ bis L₄, die von dem portablen Bedienteil 3 zuvor eingesammelt worden sind. Ist die Empfängerliste von dem portablen Bedienteil 3 an den stationären Bediensender 1 übertragen worden, können die Leuchten L₁ bis L₄ von dem als Wandschalter ausgelegten stationären Bediensender 1 angesteuert werden, und zwar ein- und ausgeschaltet werden. Somit ist eine Kommissionierung der Leuchten L₁ bis L₄ an den als stationärer Bediensender 1 ausgelegten Wandschalter vorgenommen worden, ohne dass die nunmehr verknüpften Teilnehmer des Kommunikationsnetzwerkes in eine räumliche Nähe zum Durchführen einer individuellen Nahbereichskommunikation gebracht worden sind.

Die Leuchten L₁ bis L₄ können mit dem stationären Bediensender 1 nicht nur ein- und ausgeschaltet werden, sondern auch in vorgegebenen Stufen mit einer Teillast betrieben werden. Der stationäre Bediensender 1 ist ausgelegt, dass bei einer manuellen Tastenbetätigung, die eine vorgegebene Zeitspanne überschreitet, die einzelnen vorgegebenen Dimmstufen durchlaufen werden, mithin in einer zeitlichen Folge die für die anzusteuernde Dimmstufe notwendigen Befehle gesendet werden. Bei Erreichen der gewünschten Dimmstufe wird die manuelle Betätigung des stationären Bediensenders 1 beendet.

Wenn die Leuchten L₁ bis L₄ zur Abgabe von Licht unterschiedlicher Lichtfarben ausgelegt sind, besteht durchaus die Möglichkeit, dass über den zumindest einen stationären Bediensender 1 auch eine Farbsteuerung erfolgt.

Die Empfängerliste ist in dem portablen Bedienteil 3 bei dem dargestellten Ausführungsbeispiel temporär gespeichert und wird gelöscht, wenn das portable Bedienteil 3 erneut in seinen Einsammelmodus geschaltet wird, in welchem Modus eine Verknüpfung zwischen dem portablen Bedienteil 3 und der oder den Empfängern durch die Routine "Touchlink" herbeigeführt wird. Bei dem dargestellten Ausführungsbeispiel kann die temporäre Empfängerliste auch in einen Empfängeransteuerspeicher verschoben werden. Das portable Bedienteil 3 kann in einen Ansteuermodus geschaltet werden, in dem dieses sodann als Fernbedienung zum Ansteuern der in dem Empfängeransteuerspeicher abgelegten Empfänger, hier: der Leuchten L₁ bis L₄, genutzt werden kann. Typischerweise wird bei diesem Prozess der Einsammelspeicher gelöscht. Für den Fall, dass die in dem Empfängeransteuerspeicher abgelegte Empfängerliste im portablen Bedienteil 3 an einen weiteren stationären Bediensender, mit dem die Leuchten L₁ bis L₄ angesteuert werden sollen, übertragen werden, kann die in dem Empfängeransteuerspeicher abgelegte Empfängerliste in den Einsammelspeicher kopiert oder verschoben werden. In aller Regel wird man nach Einsammeln der notwendigen Netzwerkparameter von den anzusteuernden Empfängern diese Empfängerliste vor einem Zurücksetzen des Einsammelspeichers an sämtliche stationäre Bediensender übertragen, die die Leuchten L₁ bis L₄ ansteuern sollen.

Das dann eingerichtete Kommunikationsnetzwerk zum Ansteuern der Leuchten L₁ bis L₄ kann ohne weiteres um weitere Empfänger erweitert werden. Ebenso können in der Empfängerliste des stationären Bediensenders 1 verzeichnete Empfänger aus dieser Liste gelöscht werden. Ein Hinzufügen eines oder mehrerer weiterer Empfänger in die Empfängerliste des stationären Bediensenders 1 erfolgt in gleicher Weise, wie dieses zuvor bei der Einrichtung des Netzwerkes beschrieben worden ist. Der stationäre Bediensender 1 befindet sich bei dem dargestellten Ausführungsbeispiel standardmäßig in einem Modus, in dem bei Empfang einer neuen Empfängerliste diejenigen Empfänger aus der neu empfangenen Empfängerliste in die vorhandene Empfängerliste eingetragen werden, die darin noch nicht enthalten sind. Entfernt wird hingegen ein in der Empfängerliste des stationären Bediensenders 1 vorhandener Empfänger, indem dieser ebenfalls Bestandteil einer neu empfangenden Empfängerliste ist.

Um das portable Bedienteil von dem einen in den anderen Modus zu schalten oder auch um das portable Bedienteil 3 als Fernbedienung zum Ansteuern der Leuchten L₁ bis L₄ zu nutzen, verfügt dieses über mehrere Tasten (in den Figuren angedeutet).

Das portable Bedienteil 3 verfügt des Weiteren über eine Kontrollfunktionalität, um beispielsweise vor dem Übertragen einer Empfängerliste zu kontrollieren, welche Leuchten L₁ - L₄ in der Empfängerliste tatsächlich gelistet sind. Eine solche Kontrollfunktionalität kann beispielsweise über eine Taste realisiert sein, durch dessen Betätigung die in der Empfängerliste enthaltenen Empfänger zum Arbeiten in einem Kontrollmodus angesteuert werden. Eine solche Arbeitsweise kann beispielsweise als Blinken ausgeführt sein. Auf diese Weise kann überprüft werden, ob die gewünschten Empfänger tatsächlich in der Empfängerliste vorhanden sind.

Der stationäre Bediensender für ein solches drahtloses Kommunikationsnetzwerk kann auch mit mehreren Tasten ausgeführt sein. Es ist dann möglich, unterschiedliche Tasten mit unterschiedlichen Ansteuerfunktionalitäten zu belegen und damit beispielsweise einzelne Leuchten L₁ bis L₄ oder eine Gruppierung derselben in der Ansteuerung vornehmen zu können. Durchaus möglich ist es auch, dass ein solcher stationärer Bediensender mehrere Empfängerlisten oder eine in verschiedene Gruppen unterteilte Empfängerliste hat, wobei jeweils eine Empfängerliste oder eine Gruppe der Empfängerliste einer Taste zugeordnet ist. Ebenso kann vorgesehen sein, dass die Empfängerliste des stationären Bediensenders in Gruppen geteilt ist, sodass je nach der gewünschten Ansteuerung und damit je nach der ausgeführten Tastenbetätigung die ein oder andere Gruppe oder auch alle Empfänger angesteuert werden.

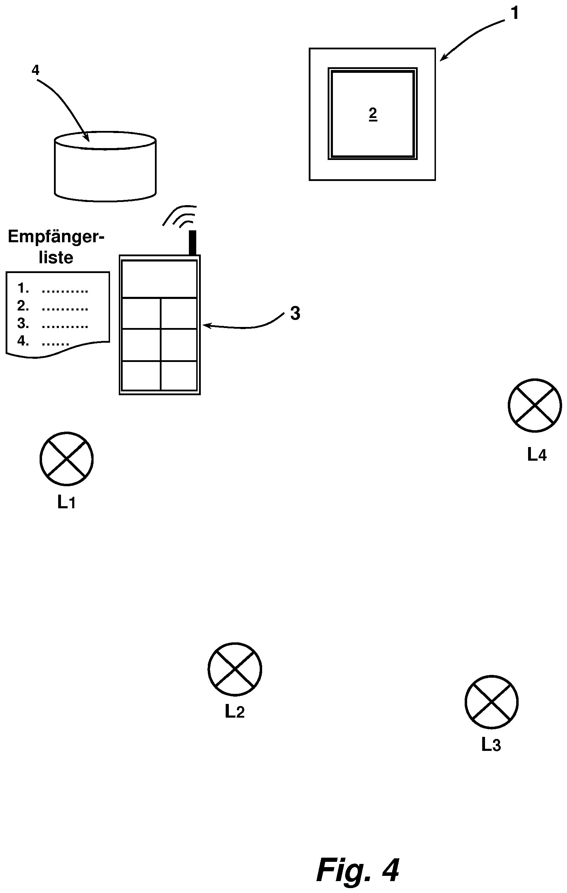

Figur 4 zeigt eine weitere Ausbaustufe des Kommunikationsnetzwerkes der vorangegangenen Figuren. Zusätzlich zu den Leuchten L₁ bis L₄, dem stationären Bediensender 1 und dem portablen Bedienteil 3 ist in dieses Kommunikationsnetzwerk ein Router 4 implementiert. Der Router 4 ist in das Kommunikationsnetzwerk ebenfalls mit dem portablen Bedienteil 3 eingebunden worden, wie dieses zu dem stationären Bediensender 1 bereits beschrieben ist. Somit können die Leuchten L₁ bis L₄ auch über den Router 4 angesteuert werden. Der Router 4 selbst ist über ein WLAN ansteuerbar, beispielsweise von einem Smartphone oder dergleichen.

In noch einer weiteren Ausbaustufe besteht die Möglichkeit, dass über den stationären Bediensender Szenen in einem oder mehreren Empfängern oder Empfängergruppen eingestellt werden können. Diese sind, wie bereits zu dem vorstehenden Ausführungsbeispiel beschrieben, dann typischerweise in jedem an dieser Szene beteiligten Aktor gespeichert. Für den Fall, dass in dem einen oder in den mehreren stationären Bediensendern die Empfängerlisten in einem flüchtigen Speicher abgelegt sind, kann auf diese Weise nach einem Stromausfall die Verknüpfung und die Szeneneinstellung ohne weiteres wieder über das portable Bedienteil von den Aktoren auf den stationären Bediensender übertragen werden.

Wie bereits angedeutet, eignet sich das beschriebene Zuordnungsverfahren und das drahtlose Kommunikationsnetz zum Ansteuern verschiedener Aktoren, wobei die Erfindung anhand von Lampen beziehungsweise Leuchten als Aktoren erläutert worden ist. Bei diesen Aktoren kann es sich beispielsweise auch um schaltbare Zwischenstecker handeln, über die ein eigentlich anzusteuernder Aktor, beispielsweise eine Stehleuchte oder dergleichen angesteuert werden soll.

### Bezugszeichenliste

- 1: stationärer Bediensender
- 2: Bedienelement
- 3: portables Bedienteil
- 4: Router
- L₁ bis L₄: Leuchten (Empfänger)

## Patentansprüche

1. Verfahren zum Zuordnen von über ein drahtloses Kommunikationsnetzwerk ansteuerbaren Teilnehmern, Empfängern, (L₁-L₄) zu zumindest einem außerhalb einer möglichen Nahbereichskommunikation mit den Empfängern (L₁-L₄) angeordneten stationären Bediensender (1), durch welchen Bediensender (1) nach erfolgter Zuordnung die ihm zugeordneten Empfänger (L₁-L₄) angesteuert werden können, wobei die Empfänger (L₁-L₄) eingerichtet sind, um eine Netzwerkverknüpfung mittels einer drahtlosen Nahbereichskommunikation nach zuvor erfolgter Aufforderung mit einem Sender einzugehen, wobei in einem ersten Schritt mit einem als Sender ausgelegten, portablen Bedienteil (3) die zu ihrer Ansteuerung notwendigen Netzparameter derjenigen Empfänger (L₁-L₄) durch Verknüpfen derselben über die Nahbereichskommunikation eingesammelt werden, die dem zumindest einen stationären Bediensender (1) zugeordnet werden sollen, und in einem nachfolgenden Schritt die Liste der eingesammelten und dem stationären Bediensender (1) zuzuordnenden Empfänger (L₁-L₄) mit ihren Netzwerkparametern von dem portablen Bedienteil (3) an den stationären Bediensender (1) über die Nahbereichskommunikation übertragen wird, sodass anschließend von dem stationären Bediensender (1) die ihm zugeordneten Empfänger (L₁-L₄) angesteuert werden können.

2. Verfahren nach Anspruch 1, **dadurch gekennzeichnet, dass** beim Empfang einer Empfängerliste von dem portablen Bedienteil (3) am stationären Bediensender (1) eine zuvor im stationären Bediensender (1) vorhandene Empfängerliste überschrieben wird.

3. Verfahren nach Anspruch 1, **dadurch gekennzeichnet, dass** in der Empfängerliste des stationären Bediensenders (1) bei Empfang einer neuen Empfängerliste von dem portablen Bedienteil (3) nur derjenige oder nur diejenigen Empfänger (L₁-L₄) in die vorhandene Empfängerliste aufgenommen werden, die darin noch nicht eingetragen sind.

4. Verfahren nach einem der Ansprüche 1 bis 3, **dadurch gekennzeichnet, dass** in der Empfängerliste des stationären Bediensenders (1) bei Empfang einer neuen Empfängerliste von dem portablen Bedienteil (3) ein in der vorhandenen Empfängerliste des stationären Bediensenders (1) bereits vorhandener Empfänger aus dieser Liste gelöscht wird.

5. Verfahren nach einem der Ansprüche 1 bis 4, **dadurch gekennzeichnet, dass** nach Übertragen der Empfängerliste von dem portablen Bedienteil (3) an einen stationären Bediensender (1) die eingesammelte Empfängerliste im portablen Bedienteil (3) gelöscht wird, wenn das portable Bedienteil (3) erneut in seinen Einsammelmodus geschaltet wird.

6. Verfahren nach einem der Ansprüche 1 bis 5, **dadurch gekennzeichnet, dass** die mit dem portablen Bedienteil (3) erstellte Empfängerliste innerhalb des portablen Bedienteils (3) in einen Empfängeransteuerspeicher verschoben werden kann, sodass mit dem portablen Bedienteil (3), wenn in seinen Ansteuermodus geschaltet, diese Empfänger (L₁-L₄) mit dem portablen Bedienteil (3) angesteuert werden können.

7. Verfahren nach einem der Ansprüche 1 bis 6, **dadurch gekennzeichnet, dass** eine manuelle Betätigung des stationären Bediensenders (1) durch eine Tastenbetätigung erfolgt.

8. Verfahren nach einem der Ansprüche 1 bis 7, **dadurch gekennzeichnet, dass** die an den stationären Bediensender (1) übertragenen Netzwerkparameter der von diesem anzusteuernden Empfänger gruppiert erfolgt und in dem stationären Bediensender (1) entsprechend abgelegt werden und jeder Gruppe an Empfängern eine bestimmte manuelle Betätigung des stationären Bediensenders (1) zum Ansteuern dieser Gruppe zugeordnet wird, sodass anschließend in Abhängigkeit von der ausgeführten manuellen Betätigung des stationären Bediensenders (1) eine, mehrere oder alle Empfängergruppen angesteuert werden.

9. Verfahren nach einem der Ansprüche 1 bis 8, **dadurch gekennzeichnet, dass** von dem stationären Bediensender (1) Lampen und/oder Leuchten (L₁-L₄) mit einem integrierten Netzwerkfunk- und Netzwerksteuerglied angesteuert werden.

10. Verfahren nach Anspruch 9, **dadurch gekennzeichnet, dass** die von dem stationären Bediensender (1) angesteuerten Lampen und/oder Leuchten mit Leuchtdioden (LED) bestückt sind.

11. Verfahren nach einem der Ansprüche 1 bis 10, **dadurch gekennzeichnet, dass** die Empfänger (L₁-L₄), der stationäre Bediensender (1) sowie das portable Bedienteil (3) zumindest für die Zwecke einer Zuordnung von Empfängern (L₁-L₄) an den zumindest einen stationären Bediensender (1) nach dem ZigBee Light Link Standard der ZigBee Alliance, Inc. arbeitend ausgelegt sind und die Einrichtung der Netzwerkbindung zwischen dem portablen Bedienteil (3) und jedem Empfänger (L₁-L₄) durch Ausführen der von dem portablen Bedienteil (3) ausgelösten Routine "Touchlink" gemäß dieser Spezifikation vorgenommen wird.

12. Drahtloses Kommunikationsnetzwerk zum Durchführen des Verfahrens nach einem der Ansprüche 1 bis 11 mit zumindest einem stationär angeordneten, manuell betätigbaren stationären Bediensender (1), mit von diesem ansteuerbaren Empfängern (L₁-L₄) und mit einem als Sender ausgelegten, portablen Bedienteil (3), wobei die Empfänger (L1 - L4) eingerichtet sind, um eine Netzwerkverknüpfung mittels einer drahtlosen Nahbereichskommunikation nach zuvor erfolgter Aufforderung mit einem Sender einzugehen, wobei der portable Bedienteil (3) dazu ausgebildet ist die zu ihrer Ansteuerung notwendigen Netzparameter derjenigen Empfänger (L1 - L4) durch Verknüpfen derselben über die Nahbereichskommunikation einzusammeln, die dem zumindest einen stationären Bediensender (1) zugeordnet werden sollen, und wobei der portable Bedienteil (3) dazu ausgebildet ist die Liste der eingesammelten und dem stationären Bediensender (1) zuzuordnenden Empfänger (L1 - L4) mit ihren Netzwerkparametern an den stationären Bediensender (1) über die Nahbereichskommunikation zu übertragen, sodass anschließend von dem stationären Bediensender (1) die ihm zugeordneten Empfänger (L1 - L4) angesteuert werden können.

13. Kommunikationsnetzwerk nach Anspruch 12, **dadurch gekennzeichnet, dass** die Teilnehmer (L₁ - L₄, 1, 3) des Kommunikationsnetzwerkes zumindest für die Zwecke einer Zuordnung von Empfängern (L₁ - L₄) an den zumindest einen stationären Bediensender (1) nach dem ZigBee Light Link Standard der ZigBee Alliance, Inc. arbeitend ausgelegt sind.

14. Kommunikationsnetzwerk nach Anspruch 12 oder 13, **dadurch gekennzeichnet, dass** in das Kommunikationsnetzwerk ein Router (4) als Gateway zum Empfangen von Ansteuerinformationen über eine andere Strecke und zum Einspeisen dieser Ansteuerinformation in das Kommunikationsnetzwerk eingebunden ist.

15. Kommunikationsnetzwerk nach einem der Ansprüche 12 bis 14, **dadurch gekennzeichnet, dass** der stationäre Bediensender (1) als Bedienelement (2) mehrere unterschiedlich belegbare Tasten aufweist.

16. Kommunikationsnetzwerk nach einem der Ansprüche 12 bis 15, **dadurch gekennzeichnet, dass** das portable Bedienteil (3) in zwei Modi schaltbar ist, wobei ein erster Modus ein Einsammelmodus zum Einsammeln der für eine Ansteuerung durch den stationären Bediensender (1) notwendigen Netzwerkparameter von den von dem stationären Bediensender (1) anzusteuernden Empfänger (L₁ - L₄) und wobei ein zweiter Modus ein Ansteuermodus ist, mit dem mit dem portablen Bedienteil (3) ein oder mehrere Empfänger (L₁ - L₄) des Kommunikationsnetzwerkes angesteuert werden können.

17. Kommunikationsnetzwerk nach einem der Ansprüche 12 bis 16, **dadurch gekennzeichnet, dass** das mobile Bedienteil (3) eine Kontrollfunktionalität aufweist, durch die die in der temporären Empfängerliste vorhandenen Empfänger (L₁-L₄) in einem Kontrollmodus arbeitend ansteuerbar sind.

## Claims

1. Method for assigning participants, receivers (L1 - L4) which can be controlled via a wireless communication network to at least one stationary control transmitter (1) arranged outside a possible close-range communication with the receivers (L1 - L4), by means of which control transmitter (1) the receivers (L1 - L4) assigned to it can be activated after the assignment has been carried out, wherein the receivers (L1 - L4) are set up in order to enter into a network link with a transmitter by means of wireless short-range communication after a request has been made beforehand, wherein in a first step, the network parameters necessary for control of those receivers (L1 - L4) which are to be assigned to the at least one stationary control transmitter (1) are collected by a portable control unit (3) designed as transmitter by linking them via short-range communication, and, in a subsequent step, the list of the receivers (L1 - L4) collected and to be assigned to the stationary control transmitter (1) with their network parameters is transmitted from the portable control unit (3) to the stationary control transmitter (1) via short-range communication, so that the receivers (L1 - L4) assigned to the stationary control transmitter (1) can then be controlled by the latter.

2. Method in accordance with Claim 1, **characterized by the fact** that when the stationary control transmitter (1) receives a receiver list from the portable control unit (3), a receiver list previously present in the stationary control transmitter (1) is overwritten.

3. Method in accordance with Claim 1, **characterized by the fact** that when the stationary control transmitter (1) receives a new receiver list from the portable control unit (3), only that receiver or only those receivers (L1 - L4) are included in the existing receiver list of the stationary control transmitter (1) which are not yet entered therein.

4. Method in accordance with any of Claims 1 to 3, **characterized by the fact** that when the stationary control transmitter (1) receives a new receiver list from the portable control unit (3), a receiver already present in the existing receiver list of the stationary control transmitter (1) is deleted from this list.

5. Method in accordance with any of Claims 1 to 4, **characterized by the fact** that after transmission of the receiver list from the portable control unit (3) to a stationary control transmitter (1), the collected receiver list is deleted in the portable control unit (3) when the portable control unit (3) is again switched to its collection mode.

6. Method in accordance with any of Claims 1 to 5, **characterized by the fact** that the receiver list created with the portable control unit (3) can be moved into a receiver control memory within the portable control unit (3), so that these receivers (L1 - L4) can be controlled by the portable control unit (3) when it is switched to its control mode.

7. Method in accordance with any of Claims 1 to 6, **characterized by the fact** that a manual operation of the stationary control transmitter (1) is effected by a key actuation.

8. Method in accordance with any of Claims 1 to 7, **characterized by the fact** that the transmission of the network parameters of the receivers to be controlled by the stationary control transmitter (1) to the stationary control transmitter (1) is grouped and the network parameters are stored in the stationary control transmitter (1) accordingly and a specific manual actuation of the stationary control transmitter (1) is assigned to each group of receivers for controlling this group, so that subsequently one, several or all receiver groups are controlled depending on the executed manual actuation of the stationary control transmitter (1).

9. Method in accordance with any of Claims 1 to 8, **characterized by the fact** that lamps and/or luminaires (L1 - L4) with an integrated network radio and network control element are controlled by the stationary control transmitter (1).

10. Method in accordance with Claim 9, **characterized by the fact** that the lamps and/or luminaires controlled by the stationary control transmitter (1) are equipped with light emitting diodes (LED).

11. Method in accordance with any of Claims 1 to 10, **characterized by the fact** that the receivers (L1 - L4), the stationary control transmitter (1) and the portable control unit (3) are designed to work according to the ZigBee Light Link Standard of the ZigBee Alliance, Inc at least for the purpose of assigning the receivers (L1 - L4) to the at least one stationary control transmitter (1) and the network connection between the portable control unit (3) and each receiver (L1 - L4) is made by executing the "Touchlink" routine triggered by the portable control unit (3) in accordance with this specification.

12. Wireless communication network for carrying out the method in accordance with any of Claims 1 to 11 with at least one stationarily arranged, manually operable stationary control transmitter (1), with receivers (L1 - L4) which can be driven by the latter, and with a portable control unit (3) designed as transmitter, wherein the receivers (L1 - L4) are set up in order to enter into a network link with a transmitter by means of wireless short-range communication after a request has previously been made, wherein the portable control unit (3) is designed to collect the network parameters necessary for control of those receivers (L1 - L4) which are to be assigned to the at least one stationary control transmitter (1) by linking them via short-range communication, and wherein the portable control unit (3) is designed to transmit the list of the collected receivers (L1 - L4) to be assigned to the stationary control unit (1) with their network parameters to the stationary control transmitter (1) via short-range communication, so that the receivers (L1 - L4) assigned to it can then be controlled by the stationary control transmitter (1).

13. Communication network in accordance with Claim 12, **characterized by the fact** that the participants (L1 - L4, 1, 3) of the communication network are designed to work according to the ZigBee Light Link Standard of the ZigBee Alliance, Inc. at least for the purpose of assigning receivers (L1 - L4) to the at least one stationary control transmitter (1).

14. Communication network in accordance with Claim 12 or 13, **characterized by the fact** that a router (4) is integrated in the communication network as a gateway for receiving control information via another route and for feeding this control information into the communication network.

15. Communication network in accordance with any of Claims 12 to 14, **characterized by the fact** that the stationary control transmitter (1) as control element (2) has several differently assignable keys.

16. Communication network in accordance with any of Claims 12 to 15, **characterized by the fact** that the portable control unit (3) is switchable into two modes, wherein a first mode is a collection mode for collecting the network parameters necessary for actuation of the receivers (L1 - L4) by the stationary control transmitter (1), and wherein a second mode is a control mode for actuation of one or more receivers (L1 - L4) of the communication network by means of the portable control unit (3).

17. Communication network in accordance with any of Claims 12 to 16, **characterized by the fact** that the mobile control unit (3) has a control functionality by means of which the receivers (L1 - L4) present in the temporary receiver list and operating in a control mode can be controlled.

## Revendications

1. Procédé d'affectation de participants, de récepteurs (L1 - L4) pouvant être commandés par l'intermédiaire d'un réseau de communication sans fil à au moins un émetteur de commande stationnaire (1) disposé en dehors d'une communication à courte distance possible avec les récepteurs (L1 - L4), par lequel émetteur de commande (1) les récepteurs (L1 - L4) qui lui sont affectés peuvent être activés après l'exécution de l'affectation, les récepteurs (L1 - L4) étant configurés pour entrer dans une liaison de réseau avec un émetteur au moyen d'une communication sans fil à courte distance après une demande préalable, dans lequel, dans une première étape, les paramètres de réseau nécessaires pour commander les récepteurs (L1 - L4) qui doivent être affectés à l'au moins un émetteur de commande stationnaire (1) sont collectés par l'unité de commande portable (3) conçue comme un émetteur en les reliant par une communication à courte distance, et, dans une étape suivante, la liste des récepteurs (L1 - L4) collectés et à être affectés à l'émetteur de commande stationnaire (1) avec leurs paramètres de réseau est transmise de l'unité de commande portable (3) à l'émetteur de commande stationnaire (1) par une communication à courte distance, de sorte que les récepteurs (L1 - L4) affectés à l'émetteur de commande stationnaire (1) peuvent ensuite être commandés par l'émetteur de commande stationnaire (1).

2. Procédé selon la revendication 1, **caractérisé en ce que** lors de la réception d'une liste de récepteurs de l'unité de commande portable (3) sur l'émetteur de commande stationnaire (1), une liste de récepteurs précédemment présente dans l'émetteur de commande stationnaire (1) est écrasée.

3. Procédé selon la revendication 1, **caractérisé en ce que** dans la liste des récepteurs de l'émetteur de commande stationnaire (1), lorsqu'une nouvelle liste de récepteurs est reçue de l'unité de commande portable (3), seulement le récepteur ou seulement les récepteurs (L1 - L4) qui n'y sont pas encore inscrits sont inclus dans la liste de récepteurs existante.

4. Procédé selon l'une des revendications 1 à 3, **caractérisé en ce que** dans la liste des récepteurs de l'émetteur de commande stationnaire (1), lors de la réception d'une nouvelle liste de récepteurs de l'unité de commande portable (3), un récepteur déjà présent dans la liste de récepteurs existante de l'émetteur de commande stationnaire (1) est supprimé de cette liste.

5. Procédé selon l'une des revendications 1 à 4, **caractérisé en ce que,** après la transmission de la liste de réception de l'unité de commande portable (3) à un émetteur de commande stationnaire (1), la liste de réception collectée est effacée dans l'unité de commande portable (3) lorsque l'unité de commande portable (3) est ramenée à son mode de collecte.

6. Procédé selon l'une des revendications 1 à 5, **caractérisé en ce que** la liste de récepteurs créée avec l'unité de commande portable (3) peut être déplacée à l'intérieur de l'unité de commande portable (3) dans une mémoire de commande de récepteurs, de sorte que, lorsque l'unité de commande portable (3) est commutée dans son mode de commande, ces récepteurs (L1 - L4) peuvent être commandés avec l'unité de commande portable (3).

7. Procédé selon l'une des revendications 1 à 6, **caractérisé en ce qu'**une commande manuelle de l'émetteur de commande stationnaire (1) est effectuée par actionner une touche.

8. Procédé selon l'une des revendications 1 à 7, **caractérisé en ce que** les paramètres de réseau des récepteurs à commander par l'émetteur de commande stationnaire (1) qui sont transmis à l'émetteur de commande stationnaire (1) sont groupés et mémorisés en conséquence dans l'émetteur de commande stationnaire (1), et à chaque groupe de récepteurs est associée une commande manuelle spécifique de l'émetteur de commande stationnaire (1) pour commander ce groupe, de sorte qu'ensuite un, plusieurs ou tous les groupes de récepteurs sont commandés en fonction de la commande manuelle exécutée de l'émetteur de commande stationnaire (1).

9. Procédé selon l'une des revendications 1 à 8, **caractérisé en ce que** des lampes et/ou des luminaires (L1 - L4) avec un élément radio de réseau et un élément de commande de réseau intégré sont commandés par l'émetteur de commande stationnaire (1).

10. Procédé selon la revendication 9, **caractérisé en ce que** les lampes et/ou les luminaires commandés par l'émetteur de commande stationnaire (1) sont équipés de diodes électroluminescentes (LED).

11. Procédé selon l'une des revendications 1 à 10, **caractérisé en ce que** les récepteurs (L1 - L4), l'émetteur de commande stationnaire (1) et l'unité de commande portable (3) sont conçus pour opérer selon la norme ZigBee Light Link Standard de ZigBee Alliance, Inc. au moins pour affecter les récepteurs à l'au moins un émetteur de commande stationnaire (1), et l'établissement de la connexion réseau entre l'unité de commande portable (3) et chaque récepteur (L1 - L4) est effectué en exécutant la routine "Touchlink" déclenchée par l'unité de commande portable (3) conformément à la présente spécification.

12. Réseau de communication sans fil pour la mise en oeuvre du procédé selon l'une des revendications 1 à 11, avec au moins un émetteur de commande stationnaire (1), pouvant être actionné manuellement, avec des récepteurs (L1 - L4) pouvant être commandés par celui-ci et avec une unité de commande (3) portable conçue comme émetteur, les récepteurs (L1 - L4) étant configurés pour entrer dans une liaison de réseau avec un émetteur au moyen d'une communication sans fil à courte distance après une demande préalable, l'unité de commande (3) portable étant conçue pour collecter les paramètres de réseau nécessaires à l'activation des récepteurs (L1 - L4) qui doivent être associés à l'au moins un émetteur de commande stationnaire (1) en les liant par communication à courte distance, et l'unité de commande portable (3) étant conçue pour transmettre la liste des récepteurs (L1 - L4) collectés à affecter à l'unité de commande stationnaire (1) avec leurs paramètres de réseau à l'émetteur de commande stationnaire (1) par une communication à courte distance, de sorte que les récepteurs (L1 - L4) qui lui sont affectés puissent ensuite être commandés par l'émetteur de commande stationnaire (1).

13. Réseau de communication selon la revendication 12, **caractérisé en ce que** les participants (L1 - L4, 1, 3) du réseau de communication sont conçus pour fonctionner selon le ZigBee Light Link Standard de ZigBee Alliance, Inc. au moins pour l'affectation de récepteurs (L1 - L4) à l'au moins un émetteur de commande stationnaire (1).

14. Réseau de communication selon la revendication 12 ou 13, **caractérisé en ce qu'**un routeur (4) est intégré dans le réseau de communication en tant que passerelle pour la réception d'informations de sélection par une autre voie et pour l'intégration de ces informations de sélection dans le réseau de communication.

15. Réseau de communication selon l'une des revendications 12 à 14, **caractérisé en ce que** l'émetteur de commande stationnaire (1) présente, comme élément de commande (2), une pluralité de touches pouvant être affectées différemment.

16. Réseau de communication selon l'une des revendications 12 à 15, **caractérisé en ce que** l'unité de commande portable (3) est commutable dans deux modes, dans lequel un premier mode est un mode de collection pour collecter les paramètres de réseau nécessaires à l'actionnement par l'émetteur de commande stationnaire (1) des récepteurs (L1 - L4) à être actionnés par l'émetteur de commande stationnaire (1), et dans lequel un deuxième mode est un mode d'actionnement avec lequel un ou plusieurs récepteurs (L1 - L4) du réseau de communication peuvent être actionnés avec l'unité de commande portable (3).

17. Réseau de communication selon l'une des revendications 12 à 16, **caractérisé en ce que** l'unité de commande mobile (3) présente une fonctionnalité de contrôle au moyen de laquelle les récepteurs (L1 - L4) présents dans la liste temporaire de récepteurs et fonctionnant dans un mode de contrôle peuvent être commandés.
